# EUROPÄISCHE PATENTANMELDUNG

(11) **EP 2 719 643 A1**
(43) Veröffentlichungstag der Anmeldung: **16.04.2014**
(21) Anmeldenummer: 13182044.1
(22) Anmeldetag: 28.08.2013
(51) Int. Cl.: B65G 47/24, B25J 9/16, G01B 11/00

(54) **Verfahren und Vorrichtung zum Ausrichten von Gegenständen**

(30) Priorität: 10.10.2012 DE 102012218481
(71) Anmelder: KAMMANN Maschinenbau GmbH, 32549 Bad Oeynhausen (DE)
(72) Erfinder:
(74) Vertreter: Lippert, Stachow & Partner

(57) **Zusammenfassung**

Die Erfindung betrifft ein Verfahren zum Ausrichten eines Gegenstandes (10) wie eines Hohlkörpers, bei welchem der Gegenstand mittels eines Transportsystems wie eines Transportbandes (110) einer Ausricht- und/oder Positioniervorrichtung zugeführt wird, wobei mittels eines Bilderfassungssystems umfassend eine Wärmebild-Kamera (130) und eine auf einem Rechner ablaufende Software zur Auswertung eines Kamerabildes des Gegenstandes dessen Istausrichtung und Istlage erfasst und die Ausricht- und/oder Positioniervorrichtung im Ansprechen auf das Auswerten angesteuert wird zum Verändern der Istausrichtung und Istlage des Gegenstandes in eine Sollausrichtung und/oder Solllage.

Der Gegenstand (10) wird zur Kontrasterhöhung vor der Aufnahme der Bilddaten durch eine Wärme- oder Kältequelle (120) zumindest partiell in seiner Temperatur verändert wird.

Die Erfindung betrifft ferner eine Vorrichtung (100) zur Durchführung eines derartigen Verfahrens.

## Beschreibung

Die Erfindung betrifft ein Verfahren und eine Vorrichtung zum Ausrichten eines Gegenstandes wie eines Hohlkörpers, bei welchem der Gegenstand mittels eines Transportsystems wie eines Transportbandes einer Ausricht- und/oder Positioniervorrichtung zugeführt wird, wobei mittels eines Bilderfassungssystems, umfassend eine Kamera und eine auf einem Rechner ablaufende Software zur Auswertung eines Kamerabildes des Gegenstandes, dessen Istausrichtung und Istlage erfasst und die Ausricht- und/oder Positioniervorrichtung im Ansprechen auf das Auswerten angesteuert wird zum Verändern der Istausrichtung und/oder Istlage des Gegenstandes in eine Sollausrichtung und/oder Solllage.

Ein solches herkömmliches Verfahren bzw. eine zugeordnete Vorrichtung sind beispielsweise auf dem Gebiet der Oberflächenbehandlung, z.B. die Dekoration von Hohlkörpern wie Flaschen, Gläsern, Flakons etc. aus Glas, Kunststoff oder Metall bzw. Verbundstoffen, bekannt. Dabei werden in der Regel die Hohlkörper über Transportbänder den jeweiligen Maschinen, welche die Dekorationsprozesse bzw. die vor- oder nachgelagerten Prozesse im Zusammenhang mit der Dekoration ausführen, zugeführt. Derartige Maschinen können beispielsweise Siebdruckmaschinen, Tampondruckmaschinen, Tintenstrahldruckmaschinen, Heißfolienübertragungsmaschinen, Oberflächenvorbehandlungsmaschinen etc. sein. Typischerweise im Einlaufbereich derartiger Oberflächenbehandlungsmaschinen ist eine Ausricht- und/oder Positioniervorrichtung angeordnet, um die Hohlkörper korrekt auf Transportbändern zu positionieren und/oder zu orientieren, sodass insbesondere eine üblicherweise angeordnete Greifvorrichtung, die als Ausricht- und/oder Positioniervorrichtung ausgebildet ist, die Hohlkörper aufnehmen und dem Oberflächenbehandlungsprozess zuführen kann. Die von einer Kamera aufgenommenen Bilddaten über die Istausrichtung und Istlage des Hohlkörpers werden dabei zur Steuerung der Ausricht- und/oder Positioniervorrichtung verwendet. Diese Steuerung ist umso genauer und schonender, je genauer die Istausrichtung und/oder Istlage des Gegenstandes erfasst werden kann. Eine unzureichende Erfassung der Istausrichtung bzw. der Istlage der Gegenstände kann dazu führen, dass unter Umständen empfindliche Oberflächen des Gegenstandes durch die Ausricht- und/oder Positioniervorrichtung geschädigt werden.

Ein umfassender Einsatz von Robotern, welche per Kamerabild den Gegenstand wie einen Hohlkörper detektieren und nachfolgend positionieren, scheitert bislang insbesondere an einer universell einsetzbaren Beleuchtung. Beispielsweise weisen die häufig sehr unterschiedlichen Geometrien der Gegenstände bzw. Hohlkörper in einer industriellen Produktionsumgebung insbesondere bei einem Glaswerkstoff stark schwankende optische Reflexions- und Transmissionseigenschaften auf, die in der Regel individuelle und auf den jeweiligen Gegenstand abgestimmte Beleuchtungsanordnungen erfordern. Darüber hinaus können bereits vorab oberflächenbehandelte Gegenstände wie lackierte, satinierte oder geätzte Gegenstände für die weitere Oberflächenveredelung vorliegen, sodass selbst bei gleichbleibender Geometrie der Gegenstände allein die wechselnde Oberflächenbeschaffenheit zu unterschiedlichen Beleuchtungserfordernissen führt.

Der Erfindung liegt die Aufgabe zugrunde, dass herkömmliche Verfahren zum Ausrichten eines Gegenstandes sowie eine zugeordnete Vorrichtung zur Durchführung des Verfahrens so weiterzubilden, dass sie universell einsetzbar ist.

Überraschenderweise wird diese Aufgabe verfahrensseitig schon durch ein Verfahren zum Ausrichten eines Gegenstandes mit den Merkmalen von Anspruch 1 gelöst. Das erfindungsgemäße Verfahren zeichnet sich dadurch aus, dass Bilddaten des Gegenstandes mit einer Wärmebild-Kamera aufgenommen werden, die zur Erfassung der Istausrichtung und/oder Istlage des Gegenstandes ausgewertet und verarbeitet werden, und wobei der Gegenstand vor der Aufnahme der Bilddaten durch eine Wärme- oder Kältequelle zumindest partiell in seiner Temperatur verändert wird. Dabei wirkt der Gegenstand als Quelle von Wärmestrahlung, welche von der Wärmebild-Kamera erfasst wird.

Durch das erfindungsgemäße Verfahren kann in einer Vielzahl von spezifischen Ausrichtsituationen die Istausrichtung und/oder Istlage des Gegenstandes im Vergleich zum beschriebenen herkömmlichen Verfahren genauer ermittelt werden, sodass die Ausricht- und/oder Positioniervorrichtung genauer an die jeweilige Ausricht- und/oder Positionierproblematik eingestellt werden kann, wodurch insbesondere Oberflächenbeschädigungen am Gegenstand bei dessen Ausrichtung im Wesentlichen vermieden werden können. In einer Vielzahl von Anwendungsfällen kann auch auf das Vorsehen von individuellen, auf den jeweiligen Gegenstand abgestimmten Beleuchtungsanordnungen verzichtet werden, da die mittels einer Wärmebildkamera aufgenommenen Bilddaten des Gegenstandes eine gute Differenzierung bestimmter Abschnitte des Gegenstandes zu anderen Abschnitten des Gegenstandes bzw. eine gute Differenzierung des gesamten Gegenstandes gegenüber einem Bildhintergrund ermöglichen. Diese Differenzierbarkeiten werden insbesondere dadurch erreicht, dass zur Kontrasterhöhung der Gegenstand vor der Aufnahme der Bilddaten durch eine Wärme- oder Kältequelle zumindest partiell in seiner Temperatur verändert wird.

Weitere Ausführungsformen und erfindungswesentliche Merkmale sind in der nachfolgenden allgemeinen Beschreibung, der Figurenbeschreibung sowie im nebengeordneten Vorrichtungsanspruch und den Unteransprüchen angegeben.

Die Ausricht- und/oder Positioniervorrichtung kann beispielsweise als Robotersystem oder als Stopper- und Schiebersystem ausgebildet sein.

Zweckmäßigerweise ist das erfindungsgemäße Verfahren derart ausgebildet, dass die Bildinformation auf Bereiche unterschiedlicher Temperatur beschränkt wird, was eine Unterscheidung oder Differenzierung von Abschnitten oder Teilen des Gegenstandes bzw. eine Unterscheidung oder Differenzierung des Gegenstandes zum Bildhintergrund vereinfacht. Insofern wird die Bildinformation auf Temperaturgradienten innerhalb des Bildes reduziert.

Um eine Kontrasterhöhung bzw. eine bessere Differenzierbarkeit von Gegenstandsdetails oder des Gegenstandes vom Bildhintergrund in den mittels der Wärmebildkamera ausgenommenen Bilddaten des Gegenstandes zu erreichen und damit die Bestimmung der Istausrichtung und/oder Istlage des Gegenstandes bei der Verarbeitung dieser Bilddaten zu verbessern, kann erfindungsgemäß vorgesehen sein, die Oberflächentemperatur des Gegenstandes zumindest abschnittsweise auch während der Aufnahme eines Kamerabildes zu verändern. Dies kann beispielsweise dadurch geschehen, dass der Gegenstand mittels einer Infrarotquelle bestrahlt wird. Je nach spezifischer Erfassungsproblematik kann die Bestrahlung in Bezug auf den Gegenstand partiell erfolgen, es ist jedoch in einer spezifischen Ausführungsform auch möglich, den Gegenstand vollflächig mittels einer oder mehrerer Infrarotquellen zu bestrahlen. Dabei kann auch vorgesehen sein, den Gegenstand aus mehreren Richtungen zu bestrahlen, insbesondere über einen großen Raumwinkel.

Es versteht sich, dass erfindungsgemäß die Oberflächentemperatur des Gegenstandes zumindest partiell auch durch den Einsatz einer Kältequelle verändert werden kann, um eine Kontrasterhöhung bzw. eine bessere Differenzierung innerhalb Details des Gegenstandes bzw. des Gegenstandes vom Hintergrund zu erzielen.

In ähnlicher Weise kann es auch zweckmäßig sein, wenn zur Kontrasterhöhung bzw. zur besseren Differenzierung des Gegenstandes vom Hintergrund die Oberflächentemperatur des Hintergrunds des Gegenstandes zumindest abschnittsweise vor der Aufnahme eines Kamerabildes des Gegenstandes verändert wird. Eine solche Modifikation kann mittels einer Wärmequelle und/oder einer Kältequelle durchgeführt werden.

Um eine nochmalig verbesserte Differenzierung des Gegenstandes in den Bilddaten gegenüber dem Bildhintergrund bereitzustellen, kann auch vorgesehen sein, dass der Hintergrund des Gegenstandes für die Kameraaufnahme so gestaltet wird, dass dessen Emissionsgrad sich in Bezug auf die von der Kamera erfassten Infrarotstrahlung um mindestens 10%, vorzugsweise um mindestens 20%, insbesondere vorzugsweise um mindestens 30% vom Emissionsgrad zumindest eines Abschnittes des Gegenstandes unterscheidet.

Zweckmäßigerweise kann der Gegenstand vor der Aufnahme eines Kamerabildes wenigstens partiell einer strahlungsaktiven Quelle ausgesetzt werden mit der Folge einer zumindest partiellen Kühlung des Gegenstandes aufgrund eines Strahlungsungleichgewichts zwischen dem Gegenstand und der Kühlquelle. Eine solche Kühlung, insbesondere eine partielle Kühlung des Gegenstandes, d.h. eine Kühlung eines Oberflächenabschnittes des Gegenstandes kann erfindungsgemäß auch mittels eines Luftstroms durchgeführt werden, mit welchem der Gegenstand angeströmt wird. In gleicher Weise kann ein zum Gegenstand erhitzter Luftstrom zum Erwärmen des Gegenstandes Verwendung finden.

Eine besonders gute Erfassung der Istausrichtung und/oder Istlage des Gegenstandes kann dadurch erreicht werden, dass nicht nur Gegenstandsbilder mittels einer Wärmebildkamera aufgenommen und datenverarbeitet werden, sondern auch Bilddaten, welche mit einer im sichtbaren arbeitenden Kamera aufgenommen wurden. Dabei können von der Auswertesoftware sowohl Daten eines Gegenstandsbilds im IR als auch Daten eines Gegenstandsbilds im Sichtbaren zur Erfassung der Istausrichtung und/oder Istlage des Gegenstandes herangezogen werden. Zweckmäßigerweise können dabei die Bilddaten im IR bzw. Sichtbaren gleichzeitig aufgenommen werden, was die Verarbeitung der Daten vereinfacht. Besonders zweckmäßig kann es dabei sein, eine Kameraeinrichtung zu verwenden, welche eingerichtet ist, sowohl im Sichtbaren als auch im IR Bilder aufzunehmen und die entsprechenden Bilddaten zur Weiterverarbeitung bereitzustellen.

Durch die Erstellung von Bildaufnahmen des Gegenstandes innerhalb zweier unterschiedlicher elektromagnetischer Spektralbereichen, nämlich im IR und im Sichtbaren, und die nachfolgende Verarbeitung beider Bilddaten kann eine bislang nicht erreichte Präzision bei der Erfassung der Istausrichtung und/oder Istlage des Gegenstandes und damit bei der Ausrichtung des Gegenstandes bereitgestellt werden.

Zweckmäßigerweise kann der von der Wärmebildkamera genutzte Spektralbereich innerhalb eines Intervalls von etwa 3,5 µm bis 15 µm liegen. Es liegt jedoch auch im Rahmen der Erfindung, einen sehr schmalbandigen Spektralbereich im IR, beispielsweise kleiner 1 µm innerhalb des angegebenen Intervalls zu nutzen.

Darüber hinaus kann es grundsätzlich zweckmäßig sein, wenn eine Mehrzahl von Bildern des Gegenstandes mittels der Wärmebild-Kamera aufgenommen und nachfolgend zur Erfassung der Istlage und/oder Istausrichtung des Gegenstandes datenverarbeitet wird. Hierdurch können während des Durchlaufs des Gegenstandes durch das Sichtfeld der Wärmebild-Kamera auch zeitabhängige Änderungen der Lagekoordinaten des Gegenstandes, beispielsweise bedingt durch schräg oder gekrümmt verlaufende Transportbänder, ermittelt und letztlich zur Ausrichtung des Gegenstandes verwendet werden.

Bei einer zweckmäßigen Ausgestaltung des erfindungsgemäßen Verfahrens kann vorgesehen sein, dass der Gegenstand durch eine gegenüberliegend zu seiner Standfläche platzierten Wärme- bzw. Kältequelle zumindest partiell in seiner Temperatur verändert wird, wobei von oberhalb oder unterhalb der Standfläche Gegenstandsbilder zur weiteren Verarbeitung aufgenommen werden. Der Begriff Standfläche bezeichnet dabei eine gekrümmte oder ebene Fläche, mit welcher sich der Gegenstand vom Untergrund, d.h. dem Transportsystem, abstützt. Der Begriff partiell meint einen Teilbereich des Gegenstandes, insbesondere einen Abschnitt seiner Oberfläche.

In einer weiteren zweckmäßigen Ausführungsform kann jedoch auch vorgesehen sein, durch eine seitlich zum Gegenstand platzierte Wärme- oder Kältequelle den Gegenstand zumindest partiell in seiner Temperatur zu verändern, wobei ein Gegenstandsbild von der Seite aufgenommen wird. Dabei meint seitlich bzw. von der Seite etwa senkrecht zur Standfläche des Gegenstandes, sodass bei dieser Ausführungsform Seitenansichten des Gegenstandes aufgenommen und zunächst zur Be-stimmung der Istausrichtung und/oder Istlage Daten verarbeitet werden.

Das erfindungsgemäße Verfahren kann zweckmäßigerweise auch zur Bestimmung des Typs des Gegenstandes eingerichtet sein, sodass mittels des erfindungsgemäßen Verfahrens gleichzeitig unterschiedliche Gegenstände, wie unterschiedlich geformte Hohlkörper verarbeitet werden können, beispielsweise in unterschiedliche Solllagen und Sollausrichtungen gebracht oder unterschiedlichen Oberflächenbehandlungsmaschinen zugeführt werden können. Dabei kann die Kontur des jeweiligen Gegenstandes erfasst und diese erfasste Gegenstandskontur mit einer Mehrzahl von in einem Speicher abgelegten vorbestimmten Gegenstandskonturen der unterschiedlichen Gegenstandstypen verglichen werden, um den Gegenstandstyp des jeweiligen Gegenstandes zu ermitteln. Darüber hinaus kann das erfindungsgemäße Verfahren auch dazu benutzt werden, Geometriedaten wie Höhe und/oder Breite des Gegenstandes zu ermitteln, welche auch zur Bestimmung des Gegenstandstyps verwendet werden können.

Vorrichtungsseitig wird das obenstehend angegebene Problem herkömmlicher Vorrichtungen durch ein Transportsystem wie beispielsweise ein Förderband, eine Wärmebildkamera mit Auswertesoftware, eine Datenverarbeitungsanlage mit Steuervorrichtung sowie ein Ausrichtsystem wie ein Roboter gelöst.. Die Begriffe Infrarotkamera und Wärmebild-Kamera werden hier synonym verwendet. Ferner umfasst die erfindungsgemäße Vorrichtung eine Wärme- oder Kältequelle um den Gegenstand vor der Aufnahme der Bilddaten zumindest partiell in seiner Temperatur zu verändern. In einer Weiterbildung kann die erfindungsgemäße Vorrichtung auch eine Wärme- oder Kälteeinrichtung umfassen, um die Oberflächentemperatur des des Bildhintergrundes zu verändern. Dieser Bildhintergrund kann beispielsweise durch eine scheibenartige oder flächige Einrichtung bereitgestellt sein.

Die Erfindung wird im Folgenden durch das Beschreiben einiger Ausführungsformen unter Bezugnahme auf die beiliegenden Figuren erläutert, wobei
- Figur 1: eine erste Ausführungsform einer erfindungsgemäßen Vorrichtung im Ausschnitt in einer Seitenansicht,
- Figur 2: die in Figur 1 dargestellte Vorrichtung in einer Draufsicht,
- Figur 3: eine zweite Ausführungsform einer erfindungsgemäßen Vorrichtung im Ausschnitt in einer Seitenansicht und
- Figur 4: die in Figur 3 angegebene erfindungsgemäße Vorrichtung in einer Draufsicht
zeigt.

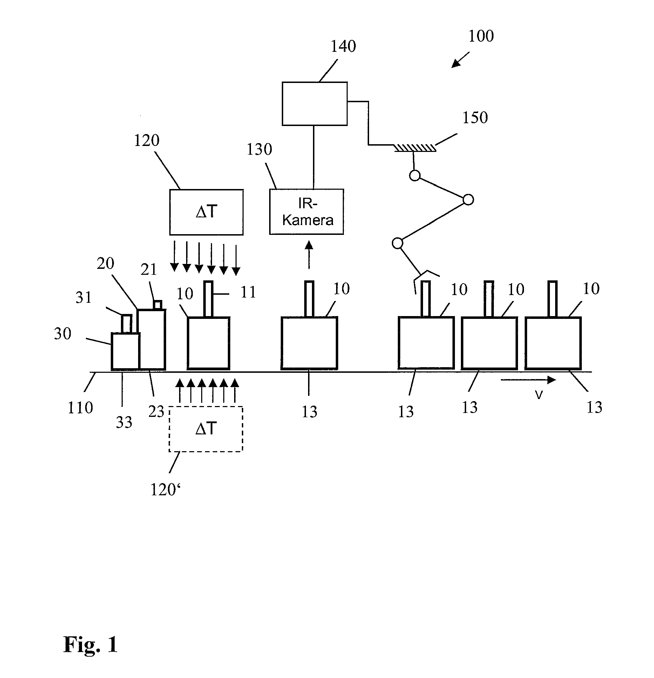

Figur 1 zeigt in einer Prinzipskizze im Ausschnitt eine erfindungsgemäß ausgebildete Vorrichtung 100 zur Umsetzung eines erfindungsgemäßen Verfahrens zum Ausrichten eines Glashohlkörpers 10, 20, 30, welcher mittels eines Transport- oder Förderbandes 110 einer als Robotersystem 150 ausgebildeten Ausricht- und Positioniervorrichtung zugeführt wird. In der beschriebenen Ausführungsform stellt das Robotersystem 150 eine vorgegebene Sollausrichtung sowie Solllage des jeweiligen Glashohlkörpers 10, 20, 30 ein, mit welcher der Gegenstand einer jeweils zugeordneten Druckmaschine zugeführt wird.

Die erfindungsgemäß ausgebildete Vorrichtung 100 ist ausgebildet, nicht nur die Istausrichtung und Istlage eines Gegenstandes zu erfassen und eine vorgegebene Solllage und Sollausrichtung der Gegenstände einzustellen, sondern kann darüber hinaus unterschiedliche Typen von Glasgegenständen 10, 20, 30, hier Glashohlkörper in Form von Flaschen differenzieren. Dabei ist die Vorrichtung eingerichtet, um jedem Glashohlkörper einen dem jeweiligen Hohlkörpertyp zugeordnete Druckmaschine zuzuführen.

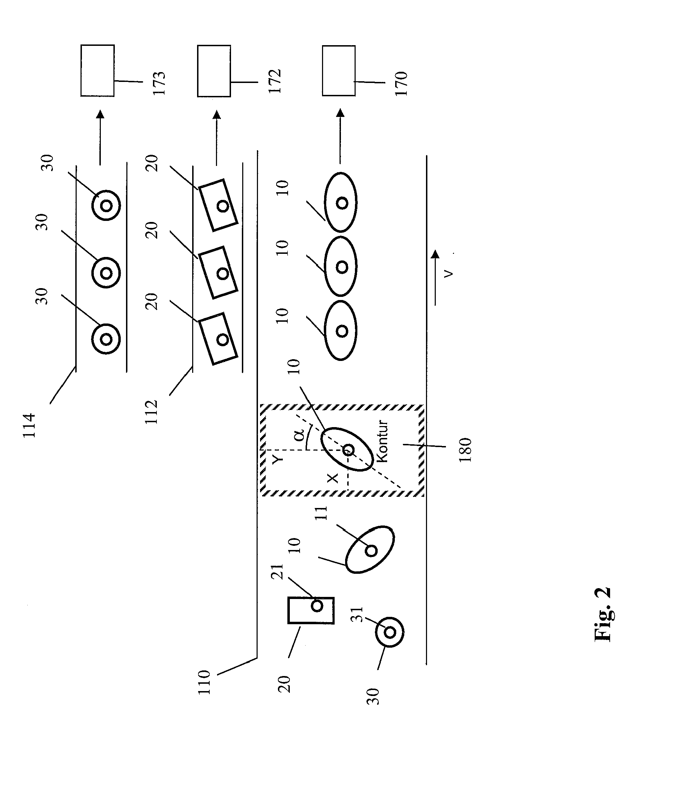

Figur 2 zeigt die in Figur 1 angegebene erfindungsgemäß ausgebildete Vorrichtung in einer Draufsicht. Wie aus den Figuren 1 und 2 erkennbar, werden über das Förderband 110 drei unterschiedliche Glashohlkörpertypen 10, 20, 30 zunächst einer stationären Infrarotquelle 120 in beliebiger Folge, Ausrichtung und Lage zugeführt, wobei sich die unterschiedlichen Glashohlkörper 10, 20, 30 über zugeordnete Standflächen 13, 23, 33 am Förderband 110 abstützen. In der Ausführungsform gemäß den Figuren 1, 2 werden die Gegenstände von oben, d.h. von der gegenüber liegenden Seite zur jeweiligen Standfläche mittels einer herkömmlichen, stationären Infrarotquelle 120 bestrahlt, sodass sich die jeweiligen Glashohlkörper an ihren kurzseitig bestrahlten Oberflächen in Abhängigkeit der Bestrahlungsdauer, welche durch die Geschwindigkeit des Transportbandes sowie die laterale Ausdehnung der Wärmequelle in Bewegungsrichtung der Glashohlkörper bestimmt ist, erwärmen. Diese Erwärmung führt am Hohlkörper und/oder gegenüber dem Förderband 110 zu einem Temperaturgradienten, welcher von einer in Bewegungsrichtung des Förderbandes 110 nachgeordneten und stationären angeordneten Infrarotkamera 130 erfasst wird. In den Figuren 1, 2 optional angegeben ist eine Kühlquelle 120' unterhalb der Standfläche 33 des Glashohlkörpers 30, welche das Transportband 110 im Bereich der Standfläche 33 kühlt und somit einen höheren Kontrast zwischen dem Glashohlkörper 30 sowie dem Bereich des bewegten Förderbandes 110 bereitstellt, an dem sich der Glashohlkörper abstützt. Dies führt zu einer verbesserten Differenzierbarkeit zwischen dem eigentlichen Gegenstand und dem Bildhintergrund, welcher in der beschriebenen Ausführungsform durch das Transportband 110 bzw. durch den Bereich des Transportbandes, an welchem sich der Gegenstand abstützt, bereitgestellt wird. Dabei ändert sich die relative Lage des Transportbandes 110 und des sich darauf abstützenden Gegenstandes bei der Bewegung des Bandes zwischen der Erwärmung der Glashohlkörper und der Kameraaufnahme nicht. Der den Bildhintergrund bildende Teil des Transportbandes ist in Fig. 2 mit dem Bezugszeichen 180 gekennzeichnet.

Die von der Kamera 130 erfassten Bilddaten werden in einer Steuereinrichtung 140 zur Ermittlung der Istausrichtung und Istlage der Glashohlkörper verarbeitet, wobei diese Steuereinrichtung dann das nachgeschaltete Robotersystem 150 ansteuert zum Greifen des erfassten Gegenstandes und zum Einstellen einer vorgegebenen Sollausrichtung und Solllage, damit der jeweilige erkannte Gegenstand der zugeordneten Druckmaschine zugeführt wird.

Wie insbesondere aus Figur 2 hervorgeht, werden über das Transportband 110 in der beschriebenen Ausführungsform drei unterschiedliche Glashohlkörper 10, 20, 30 transportiert, wobei von jedem Gegenstand durch die jeweils zur Standfläche 13, 23, 33 gegenüber liegende Infrarotkamera Bilddaten aufgenommen werden, welche von der Steuereinrichtung 140 zur Ermittlung der Istlage, hier gekennzeichnet durch die Koordinaten X, Y in der Ebene des Transportbandes, sowie zur Ermittlung der Orientierung oder Ausrichtung, hier gekennzeichnet durch den Winkel α einer Hauptachse des Gegenstandes zur Y-Achse in der Ebene, die durch das Transportband 110 definiert ist, verwendet werden.

In der beschriebenen Ausführungsform ist die Auswertesoftware eingerichtet, um die hier möglichen drei Typen von Hohlglaskörpern zu erfassen und zu unterscheiden. Da in dem beschriebenen Beispiel die drei unterschiedlichen Typen von Glaskörpern unterschiedlichen Druckprozessen zugeführt werden müssen, welche in Figur 2 mit den Bezugszeichen 170, 172 bzw. 173 gekennzeichnet sind, ist das Robotersystem 150 eingerichtet, jeden Glashohlkörper des ersten Typs mit einer vorgegebenen Solllage und Sollausrichtung auf dem Förderband 110 zu platzieren, darüber hinaus jeden Glashohlkörper 20 des zweiten Typs mit vorgegebener Lage und Ausrichtung auf einem zweiten Förderband 112 und jeden Glashohlkörper 30 mit vorgegebener Solllage und Sollausrichtung auf einem Förderband 114.

Bei dem erfindungsgemäßen Verfahren bzw. der beschriebenen erfindungsgemäßen Vorrichtung kann vermieden werden, dass sich die Glashohlkörper berühren, sodass es zu keinerlei Beschädigungen an deren Oberflächen kommt. Darüber hinaus kann das Robotersystem 150 aufgrund der sehr genauen Erfassung der Istausrichtung und der Istlage der jeweiligen Hohlkörper die Glaskörper exakt greifen, wodurch wiederum Oberflächenbeschädigungen an den Hohlkörpern vermieden werden können.

Eine Softwareanpassung ermöglicht die schnelle Umrüstung der Vorrichtung bzw. des Verfahrens an unterschiedliche Hohlkörper. Ohne weiteres können in einer nicht dargestellten Ausführungsform im Zuge weiterer Automatisierung auch Hohlkörper aus standardisierten und automatisiert zu- und abgeführten Ladungsträgern wie Kleinpaletten, thermogeformten Tabletts etc. mit dem erfindungsgemäßen Verfahren bzw. der angegebenen erfindungsgemäßen Vorrichtung verarbeitet werden.

Vorliegend bezieht sich der Begriff Istlage auf die Position des Flaschenhalses des jeweiligen Glashohlkörpers, projiziert auf die Ebene des jeweiligen Transportbandes 110, 112 bzw. 114. Es versteht sich, dass je nach Anwendungsfall auch andere Bezugspunkte innerhalb oder außerhalb des jeweiligen Gegenstandes zur Festlegung der jeweiligen Koordinaten ausgewählt sein können.

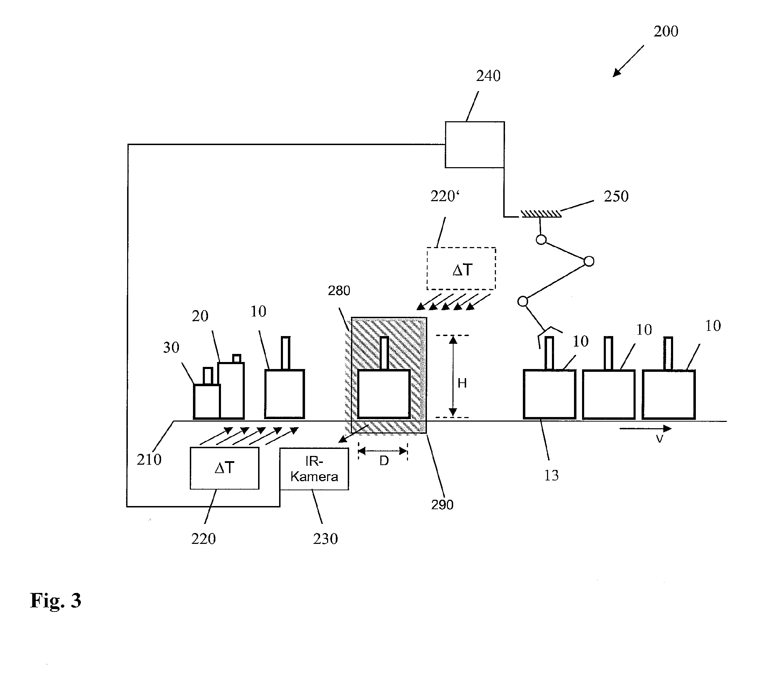

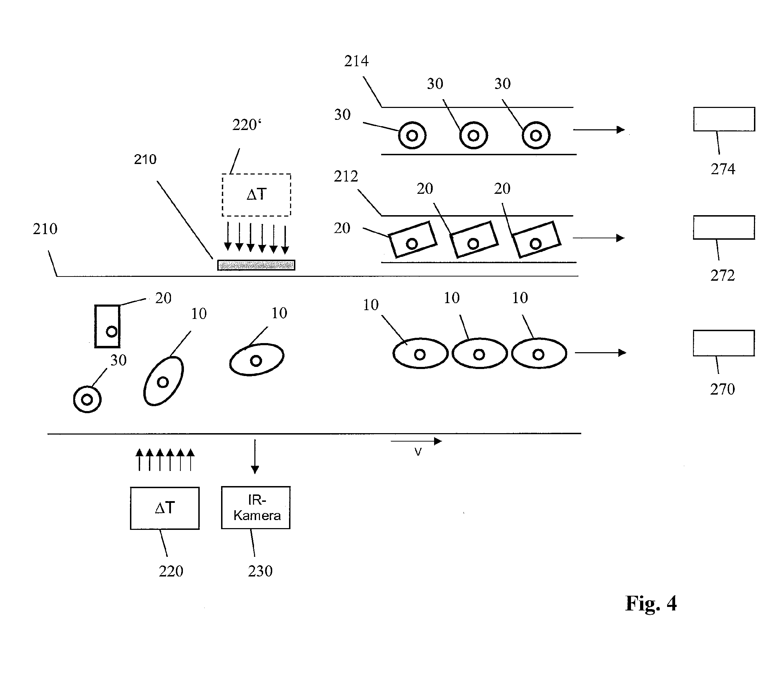

Mit Bezug auf die Figuren 3, 4 wird im Folgenden eine weitere Ausführungsform eines Verfahrens zum Ausrichten eines Gegenstandes bzw. eine zugeordnete Vorrichtung zur Umsetzung eines solchen Verfahrens beschrieben. Im Gegensatz zu der Ausführungsform gemäß den Figuren 1, 2, bei welcher die Bestrahlung als auch die Kameraausrichtung vertikal erfolgt, werden die Glashohlkörper 10, 20, 30 hier seitlich bestrahlt, wobei auch die Infrarotkamera zur Seitenabbildung des jeweiligen Gegenstandes eingerichtet ist. Die Vorrichtung 200 umfasst wiederum ein Förderband 210, über das Hohlkörper 10, 20, 30 dreier verschiedener Typen einem Robotersystem 250 zugeführt werden, welches von einer Steuereinrichtung 240 angesteuert wird zum Einstellen einer vorgegebenen Istausrichtung und Istlage der jeweiligen Gegenstände 10, 20, 30.

Die Gegenstände werden über das Transportband 210 zu einer seitlich angeordneten, stationären Infrarotquelle 220 transportiert, welche den jeweiligen Gegenstand erwärmt. In Bewegungsrichtung des Bandes ist nachfolgend eine seitlich angeordnete Infrarotkamera 230 vorgesehen, welche eine Seitenaufnahme des jeweiligen Gegenstandes erstellt, wobei seitlich gegenüberliegend zur Kamera ein künstlicher Bildhintergrund in Form einer Platte 280 angeordnet ist, die zur Steigerung der Differenzierbarkeit des Gegenstandes zum Bildhintergrund durch eine Kältequelle 220' gekühlt werden kann. Aufgrund der Seitenaufnahme der Glashohlkörper ist die Auswertesoftware in der Steuereinrichtung 240 in der Lage, nicht nur den jeweiligen Typ, die Istlage sowie die Istausrichtung des jeweiligen Glashohlkörpers zu erfassen, sondern darüber hinaus auch dessen Breiten- und Höhenmaß D, H in der Bildebene der Infrarotkamera, siehe Figur 3.

Die in den Figuren 3, 4 angegebene Ausführungsform ist der Bildhintergrund durch eine plattenförmige Gestaltung 280, beispielsweise aus Metall realisiert, wobei diese Platte zweckmäßigerweise parallel zur Bildebene der Kamera angeordnet ist. Auch bei dieser horizontalen Arbeitsweise der Infrarotquelle bzw. der -kamera ermöglicht der Temperaturgradient im Hohlkörper und/oder zwischen Hohlkörper und dem Gegenstandshintergrund die Aufnahme von Infrarotbilddaten, welche zur Erfassung der Istausrichtung und Istlage des jeweiligen Gegenstandes ausgewertet und verarbeitet werden können, sodass nachfolgend das Robotersystem 250 von der Steuereinrichtung 240 angesteuert werden kann, um den jeweiligen Gegenstand mit vorgegebener Istlage und Istausrichtung auf einem zugeordneten Transportband 210, 212, 214 zu platzieren, sodass diese ihren spezifischen Druckprozessen 270, 272, 274 zugeführt werden.

### Bezugszeichenliste

- 10: Glashohlkörper
- 11: Glashohlkörperhals
- 13: Standfläche
- 20: Glashohlkörper
- 21: Glashohlkörperhals
- 23: Standfläche
- 30: Glashohlkörper
- 31: Glashohlkörperhals
- 33: Standfläche
- 100: Vorrichtung
- 110,112 114: Förderband
- 120: Infrarotquelle
- 120`: Kältequelle
- 130: Infrarotkamera
- 140: Steuereinrichtung
- 150: Robotersystem
- 200: Vorrichtung
- 210, 212 214: Förderband
- 220: Infrarotquelle
- 220`: Kältequelle
- 230: Infrarotkamera
- 240: Steuereinrichtung
- 250: Robotersystem
- V: Bewegungsrichtung

## Patentansprüche

1. Verfahren zum Ausrichten eines Gegenstandes wie eines Hohlkörpers (10, 20, 30), bei welchem der Gegenstand mittels eines Transportsystems wie eines Transportbandes einer Ausricht- und/oder Positioniervorrichtung zugeführt wird, wobei mittels eines Bilderfassungssystems umfassend eine Kamera und eine auf einer Datenverarbeitungsanlage ablaufende Software zur Auswertung eines Kamerabildes des Gegenstandes dessen Istausrichtung und/oder Istlage erfasst und die Ausricht- und/oder Positioniervorrichtung im Ansprechen auf das Auswerten angesteuert wird zum Verändern der Istausrichtung und Istlage des Gegenstandes in eine Sollausrichtung und/oder Solllage, **dadurch gekennzeichnet, dass** Bilddaten des Gegenstandes mit einer Wärmebild-Kamera (130, 230) aufgenommen werden, die zur Erfassung der Istausrichtung und/oder Istlage des Gegenstandes ausgewertet und verarbeitet werden, und wobei der Gegenstand zur Kontrasterhöhung vor der Aufnahme der Bilddaten durch eine Wärme- oder Kältequelle zumindest partiell in seiner Temperatur verändert wird.

2. Verfahren nach Anspruch 1, **dadurch gekennzeichnet, dass** zur Kontrasterhöhung die Oberflächentemperatur des Hintergrundes des Gegenstandes zumindest abschnittsweise vor der Aufnahme eines Kamerabildes des Gegenstandes verändert wird.

3. Verfahren nach einem der Ansprüche 1 oder 2,
**dadurch gekennzeichnet, dass** der Gegenstand vor der Aufnahme eines Kamerabildes wenigstens partiell mittels einer Infrarotquelle (120, 220) bestrahlt wird.

4. Verfahren nach einem der Ansprüche 1 bis 3,
**dadurch gekennzeichnet, dass** der Hintergrund des Gegenstandes für eine Kameraaufnahme so gestaltet wird, dass dessen Emissionsgrad sich um mindestens 10 %, vorzugsweise um mindestens 20%, besonders vorzugsweise um mindestens 30% vom Emissionsgrad des Gegenstands unterscheidet.

5. Verfahren nach einem der Ansprüche 1 bis 4,
**dadurch gekennzeichnet, dass** der Gegenstand vor der Aufnahme eines Kamerabildes wenigstens partiell einer strahlungsaktiven Kältequelle (120', 220') ausgesetzt wird.

6. Verfahren nach einem der Ansprüche 1 bis 5,
**dadurch gekennzeichnet, dass** ein Gegenstandsbild zusätzlich zur Wärmebild-Kamera (130, 230) mit einer im Sichtbaren arbeitenden Kamera aufgenommen wird, wobei durch die Auswertesoftware sowohl Daten von Gegenstandsbildern im IR als auch Daten von Gegenstandsbildern im Sichtbaren zur Erfassung der Istausrichtung und Istlage des Gegenstandes herangezogen werden.

7. Verfahren nach einem der Ansprüche 1 bis 6,
**dadurch gekennzeichnet, dass** der Typ des Gegenstands erkannt wird, insbesondere anhand seiner Kontur.

8. Verfahren nach einem der Ansprüche 1 bis 7,
**dadurch gekennzeichnet, dass** eine Mehrzahl von Bildern eines einzelnen, sich bewegenden Gegenstandes aufgenommen und verarbeitet wird.

9. Verfahren nach einem der Ansprüche 1 bis 8,
**dadurch gekennzeichnet, dass** der Gegenstand durch eine seitlich zu diesem platzierte Wärme- bzw. Kältequelle (220, 220') zumindest partiell in seiner Temperatur verändert wird, wobei ein Gegenstandbild von der Seite aufgenommen wird.

10. Verfahren nach einem der Ansprüche 1 bis 9,
**dadurch gekennzeichnet, dass** Geometriemaße wie Höhe oder Breite des Gegenstandes ermittelt werden.

11. Vorrichtung zum Ausrichten eines Gegenstandes wie eines Hohlkörpers (10, 20, 30) umfassend
- ein Transportsystem zum Zuführen des Gegenstandes an
- eine Ausricht- und/oder Positioniervorrichtung zum Ausrichten und Positionieren des Gegenstandes;
- ein Bilderfassungssystem umfassend eine Kamera zur Aufnahme zumindest eines Kamerabildes des Gegenstandes sowie eine
- Datenverarbeitungsanlage, auf welcher eine Software zur Auswertung eines Kamerabildes des Gegenstandes abläuft zur Erfassung von dessen Istausrichtung und/oder Istlage, wobei die Ausricht- und/oder Positioniervorrichtung im Ansprechen auf das Auswerten angesteuert ist zum Verändern der Istausrichtung und/oder Istlage des Gegenstandes in eine Sollausrichtung und/oder Solllage, **dadurch gekennzeichnet, dass** die Kamera als Wärmebild-Kamera (130, 230) ausgebildet ist, und ferner eine Wärme- oder Kältequelle umfasst ist, die eingerichtet ist, den Gegenstand vor der Aufnahme der Bilddaten zumindest partiell in seiner Temperatur zu verändern.
